# EUROPEAN PATENT SPECIFICATION

(11) **EP 2 966 044 B1**
(45) Date of publication and mention of the grant of the patent: **26.09.2018**
(21) Application number: 15173775.6
(22) Date of filing: 25.06.2015
(51) Int. Cl.: C03B 19/08

(54) **A METHOD TO PRODUCE FOAM GLASSES**
VERFAHREN ZUR HERSTELLUNG VON SCHAUMGLÄSERN
PROCÉDÉ POUR PRODUIRE DES VERRES EXPANSÉS

(30) Priority: 07.07.2014 DK 201470419
(43) Date of publication of application: 13.01.2016
(73) Proprietor: A/S Graasten Teglværk, 6300 Graasten (DK)
(72) Inventor: König, Jakob, 9000 Aalborg (DK); Petersen, Rasmus Rosenlund, 9200 Aalborg SV (DK); Yue, Yuanzheng, 9000 Aalborg (DK)
(74) Representative: Plougmann Vingtoft a/s

(56) References cited:
- EP-A1- 1 213 268
- WO-A1-2014/053144
- KR-A- 20140 048 361
- US-A- 2 337 672
- US-A- 2 582 852
- US-A- 2 758 937
- US-A- 3 441 396
- US-A- 3 532 480
- US-A- 3 574 655
- US-A1- 2005 261 121
- Gerhard Bayer: "North-Holland Publishing Company FOAMING OF BOROSILICATE GLASSES BY CHEMICAL REACTIONS RANGE 950 -I150°C", Journal of Non-Crystalline Solids, 1 January 1980 (1980-01-01), pages 855-860, XP055224558, Retrieved from the Internet: URL:http://www.sciencedirect.com/science/a rticle/pii/002230938090544X/pdf?md5=6680aa 660c07e1a361e0678a83423a02&pid=1-s2.0-0022 30938090544X-main.pdf
- KÖNIG JAKOB ET AL: "Fabrication of highly insulating foam glass made from CRT panel glass", CERAMICS INTERNATIONAL, vol. 41, no. 8, 17 April 2015 (2015-04-17) , pages 9793-9800, XP029141114, ISSN: 0272-8842, DOI: 10.1016/J.CERAMINT.2015.04.051

## Description

### FIELD OF THE INVENTION

The present invention relates to a production process of foam glass, and more particularly to a process wherein pure carbon, or a compound which yields pure carbon as the foaming agent is oxidized by a sufficient amount of an efficient oxidizing agent essentially added to the glass-carbon powder mixture, where the oxidizing agent supplies oxygen in the relevant temperature range, to release CO/CO₂ gas mixture in the softened glass at elevated temperature, to form a foamed glassy material with CO₂ gas filled cells.

### BACKGROUND OF THE INVENTION

European market of insulating materials is dominated by inorganic fibrous materials, which account for 57% of the market, and organic foams, accounting for 42% of the European market in 2012. Foam glass that has been known for more than 80 years has only negligible market share. It is mainly being used in industry, while it found only limited use in the building sector. In the last decade, however, an increase in consumption of foam glass gravel for ground insulation and frost protection is being witnessed.

In comparison to other insulation materials foam glass has superior mechanical and chemical stability accompanied with moderate insulation properties, while the main disadvantage is high production cost and consequently, high market price. To increase the market share of foam glass its insulation performance needs to be improved and production costs have to be lowered. The later can be realized by using waste glass or glassy materials as starting glass material thus eliminating the energy consuming glass forming step in the production. By doing so, however, fluctuations in the glass composition inevitably appear, and influence or even deteriorate the properties of the product. Thereafter, the glass composition needs to be kept in well-defined limits and is continuously being monitored in the production process. Even more important is that the gas forming mechanism, with the selection of foaming agents, has to be adjusted to the glass composition.

Transformation of waste glasses and glassy materials into foam glass has lately been recognized as a promising way to recycle and stabilize wastes, thus decreasing the amounts of landfilled materials. The recycling of waste glassy materials in foam glass would be cost effective, since the price of deposition of such materials in secured landfills is high. Use of various coloured container glass and flat glass in the production of foam glass is well established, while production of foam glass from other waste glass sources is possible but implemented in limited amounts. The main issue is in supplying sufficient amounts of wastes with a composition within reasonable fluctuations to keep the overall composition of the glass in defined limits.

As mentioned, the foaming mechanism has to be adjusted to the glass composition and more parameters have to be considered. Firstly, the temperature at which the gas-forming reactions occur has to be above the softening point of the glass. It is empirically known that the minimum density of foamed material is obtained in the viscosity range between 10⁸ and 10³ Pa•s. Secondly, the gas forming reactions may occur by thermal decomposition (typically carbonates or sulphates are used) or by redox reaction (foaming with carbon containing compounds). If the gas is released by thermally induced chemical decomposition, the glass composition will be modified by the remaining metal oxide, which incorporates into the glass network. However, in decomposition reactions the composition of the released gasses is known, which is not the case if the gasses are released by redox reaction. In this case, oxygen for the oxidation of carbon containing foaming agent comes from the glass, thus the redox potential of the glass needs to be adapted in a way that enough oxygen is available. Chemically dissolved oxygen is the main source of the oxygen in the glass, and is bonded in polyvalent ions (sulphate or iron oxide). Thirdly, initial particle size of the glass and the foaming agent has to be considered. To get the lowest possible density and homogeneous porosity fine powders need to be used. Fourthly, small particle size is related also to a reduced diffusion path of the oxygen through the glass network in case of redox reactions. This assures that the gas-forming reactions are finished in a reasonable time frame. All these considerations lead to the requirement of closely controlling the glass composition to assure constant physical properties of the foamed material.

In the above discussion, it was pointed out that a constant well-defined composition is needed to assure a stable production process and constant properties of foamed material. The industrial producers mainly use foaming by a redox reaction. If the pre-melting step is used in the production process, it is possible to precisely control the composition and to adjust the redox potential the glass by addition of polyvalent ions (sulphate or iron oxide). These ions in high valence states are favourable for releasing free oxygen and hence for enhancing the oxidation of a carbon-based foaming agent. However, the additives are added into the glass mixture to be melted and homogenized. Besides the need for a melting step, there are several other drawbacks of such process. Firstly, the melting atmosphere and other conditions need to be controlled so the additives are not reduced at the melting temperature. Secondly, even though the melting atmosphere is oxidative, the oxidation state of the additives may change to some degree and part of the additive can be reduced. Thirdly, since the additives are fully incorporated into the glass network, the oxygen has to diffuse through the glass network to oxidize carbon-based foaming agent thus the glass has to be finely milled, e.g. average particle size 2-4 µm.

The presence of polyvalent ions in the glass, i.e. the glass composition, is essential for a foaming process based on redox reactions. An investigation of soda-lime-silicate glass without and with iron showed that in the presence of iron the onset temperature of gas formation decreases for as much as 400 °C. However, the iron should be in appropriate oxidation state, which depends on the redox potential of the glass. Measuring of the partial oxygen pressure of the glass during melting allows an estimation of the foaming capability of a glass with constant iron concentration. If there is more than one polyvalent ion present in the glass, the polyvalent species influence each other through the physically dissolved oxygen.

A further problem in producing foam glass may be that generally using different types of cullets causes colossal fluctuations of the composition of the glass and its redox potential.

Indeed, in general, the oxygen for the oxidation of the foaming agent comes from the glass itself, thus the composition of the glass plays a crucial role in the conventional processes.

The composition of the glass governs also its stability. When a finely milled foaming agent is added to ta finely milled glass, there is a strong potential for surface crystallization to appear. In case the glass stability is low, devitrification may progress and change or even inhibit the foaming process. If the amounts of the foaming agent(s) are larger, the devitrification is more likely to appear. Although partial crystallization may positively influence mechanical properties of obtained foam glass-ceramics, already a slight mismatch in the coefficient of thermal expansion between glass and crystals leads to a strong negative impact on the mechanical properties. Furthermore, in general the thermal conductivity of a crystalline phase is higher than that of a glass phase. Thus, the crystallization of the foamed material is generally to be avoided.

Known method of making foam glass using oxides have been previously disclosed: US 2,758,937 discloses a method of making foam glass using metal oxides as oxidizing agent; US 2,582,852 discloses a method of making foam glass using iron oxide; KR 10-2014-0048361 describes a method of making foam glass using cobalt oxide.

WO 2014/053144 describes the use of manganese oxide as oxidizing agent.

The use of inibitors is known for example from Bayer et al., JOURNAL OF NON-CRYSTALLINE SOLIDS, 1 January 1980, pages 855 - 860.

In particular US 2005/0261121 describes the use phosphonates while EP 1213268 discloses the use of sodium silicate as inhibitors.

Hence, an improved method of producing foam glass would be advantageous, and in particular, a method of producing foam glass that is not or is less dependent on the glass material used for the production would be advantageous.

### OBJECT OF THE INVENTION

It is an object of the invention to provide a method of producing foam glass that is independent or minorly depended on the composition of the glass used for producing the foam glass.

It is a further object of the present invention to provide a method of producing foam glass with improved thermal insulation properties.

It is a further object of the present invention to provide an alternative to the prior art.

### SUMMARY OF THE INVENTION

The present invention is directed towards a cost-effective process for producing foam glass products (from different inorganic non-metallic glasses, preferably waste cullets) which possess low weight per unit volume and low thermal conductivity. The glass sources are primarily selected from different waste glasses having different composition. Thus, the present invention provides an economically feasible foaming method for glass batches of different composition foamed at very similar conditions.

Thus, the above described object and several other objects are intended to be obtained in a first aspect of the invention by providing a method of producing foam glasses as defined in claim 1.

After blending and before heating the mixture may be placed into a mould or on a conveyer belt in order to transport said mixture through the oven.

The heating may be to a temperature between 700-1100 °C, to a temperature at least sufficient to soften the glass and release gasses from the foaming agent and thereby foam the glass. Due to a variety of the glass composition of cullets, the foaming process is viscosity-controlled. The optimum viscosity range is found to be between 10³ and 10⁸ Pa•s.

Moreover, the method of the invention has the advantage of being able to produce foam glass from a glass having a decreased thermal conductivity compared to the conventional starting material and having a decreased thermal conductivity for the same density of the product in comparison to commercial products currently on the market.

The present invention relates to a production process of foam glasses, and more particularly to a process wherein carbon-based foaming agent is oxidized by addition of an efficient agent that supplies oxygen in the relevant temperature range, to release CO/CO₂ gas in the softened glass at elevated temperature to form a foamed material.

The present invention provides improvements to the state-of-the-art foaming process, which result in a decreased thermal conductivity for the same density of the product in comparison to commercial products currently on the market. In particular, the use of cathode ray tube (CRT) panel glass or similar as starting material is advantageous due to its lower heat conductivity. The glass starting material may comprise waste glass.

The glass starting material may be only waste glass, e.g. mix-coloured container glass, window glass, lead-free cathode ray tube (CRT) panel glass, and mixtures thereof.

The use of waste glass as starting material has the advantage of keeping the costs of raw materials low and of avoiding the energy consuming glass melting step. In particular, the use of CRT panel glass as foam glass material is advantageous due to its lower heat conductivity.

Besides waste glass cullet, other types of glass and glassy materials can be added to the mixture, e.g. formulated glass for adjusting overall composition, glassy minerals, slags, and fly ashes.

In the present invention, oxygen is supplied by an oxidizing agent that can be easily reduced in the applicable viscosity/temperature range. The oxidizing agent supplies the oxygen necessary to burn the carbon and produce CO/CO₂ gas mixture, which is then transformed into pure CO₂ during cooling according to Boudouard equilibrium.

The oxygen available from the oxidizing agent is much more easily accessible for oxidation of carbon than the oxygen from the glass itself. Thereafter, the temperature and time requirements for the foaming process are reduced, leading to lower energy consumption.

Since the oxygen is supplied by the oxidizing agent, glass powders with different compositions can be foamed at similar conditions in case their viscosity is similar, for example bottle glass, flat glass and CRT panel glass exhibit similar T_{g} at around 520 - 550 °C, i.e. they exhibit similar viscosities in the gas forming temperature range.

In some embodiments the oxidizing agent is in an amount between 1 and 10 %, by weight, relative to the total weight of the glass.

The oxidizing agent is or comprises a metal oxide, wherein the metal of the metal oxide is a transition metal.

The oxidation state of the metal oxides acting as oxidizing agents is crucial to be able to provide oxygen in the right temperature range at the determined foaming conditions. For example, oxygen-releasing reactions with manganese oxide in different atmospheres are:
2Mn₃O₄ -> 6MnO + O₂ (in an oxygen deficient atmosphere)
6Mn₂O₃ -> 4Mn₃O₄ + O₂ (in an oxygen atmosphere)
MnO -> no foaming (in a reducing atmosphere)

In the invention the metal oxide comprises Mn in its mixed valence state II and III, for example, the metal oxide may be Mn₃O₄.

In some embodiments of the invention, according to the reactions above, manganese is added in the form of Mn₃O₄ when foaming in oxygen deficient atmosphere. If it is added in a higher oxidation state, e.g. Mn₂O₃ or MnO₂, these species are reduced to Mn₃O₄ before the porous structure is closed. The excess oxygen burns away some of the carbon-based foaming agent, which leads to lower foaming efficiency and influences the foaming mechanism, i.e. the foaming temperature is increased and foam morphology changed.

The use of manganese oxide as oxidizing agent has the further advantage of lowering the thermal conductivity of the glass foam, by lowering the thermal conductivity of the glass.

In some embodiments, the foaming agent is or comprises carbon in an amount between 0.1 and 2 % of the total weight of the glass.

The foaming agent used may be selected among pure carbon compounds, e.g. coal, activated carbon, carbon black, charcoal, petro coke, graphite, soot or similar. In some other embodiments, the foaming agent used may be selected among carbohydrates that furnish pure carbon when heated in low oxygen atmosphere. In the latter case, the pyrolysis of carbohydrates has to be controlled otherwise generation of H₂O and CO in the foaming temperature range may occur. This generation may be disadvantageous as these gasses with a higher thermal conductivity than CO₂ may fill the pores. Use of SiC is disadvantageous due to several reasons; it oxidizes at higher temperatures, the gasses may comprise CO and H₂, and moreover, SiO₂ as a side product of the reaction strongly alters properties of the glass.

According to some embodiments of the method of the invention, the crystallization may be controlled by adding a suitable compound.

Thus, the method may further comprise adding to the mixture before blending the mixture, one or more crystallization inhibitors in an amount between 0.2 and 6 % by weight, relative to the total weight of the glass.

The one or more crystallization inhibitors may be or comprise a phosphate. For example the phosphate may be CaHPO₄·2H₂O.

In some embodiments the phosphate is a magnesium or sodium phosphate.

In some further embodiments the one or more crystallization inhibitor comprises Na₂SiO₃ or Al₂O₃•2SiO₂•2H₂O (kaolin).

In some embodiments the blending is achieved by milling, thereby reducing the particle size to below 30 µm.

In some embodiments the glass used to produce the foam glass has a low thermal conductivity, for example CRT-panel glass, and the oxidizing agent is Mn₃O₄, thereby producing foam glass with thermal conductivity equal to or lower than 40 mW/(m·K) at a density of 150 kg/m³. Moreover, for each further decrease in the foam density in an amount of 10 kg/m³ the thermal conductivity is further lowered by ∼1 mW/(m·K).

Thus, a glass with a low thermal conductivity foamed with Mn₃O₄, through the method of the invention could be converted into a foam glass with lambda value, i.e. thermal conductivity, equal to or lower than 40 mW/(m·K) at a density of 150 kg/m³.

### BRIEF DESCRIPTION OF THE FIGURES

The method according to the invention and the produced foam glass will now be described in more detail with regard to the accompanying figures. The figures show one way of implementing the present invention and is not to be construed as being limiting to other possible embodiments falling within the scope of the attached claim set.
Figure 1 is a flow-chart of a method according to some embodiments of the invention.
Figure 2 thermal conductivity for a CRT-panel glass-based foam glass produced according to some embodiments of the invention.
Figure 3 shows thermal conductivity comparison for a CRT-panel glass-based foam glass produced according to some embodiments of the invention including experimetally validated model curve.

### DETAILED DESCRIPTION OF AN EMBODIMENT

In carrying out the invention, the production process may start with grinding of glass cullets to a size that is typically below 100 µm. Then the glass powder is mixed with a foaming agent (milled to a suitable size; equal or smaller to the glass powders) and an oxidizing agent (milled to a similar or smaller size than the glass powders). The amount of added foaming agent and sum of added oxidizing agents are 0.1 - 2 wt.% and 1 - 10 wt.% , respectively. Then the mixture is blended by a ball milling (preferably dry milling) to assure proper mixing and additional milling (size reduction typically to d₉₀ below 30 µm), compressed and supplied to the foaming furnace in moulds or on a conveyer belt. Low oxygen atmosphere (by under-stoichiometric gas burning or similar) should be applied (at least) during heating in the temperature region between 350 and 700 °C, to prevent carbon oxidation and to assure entrapment of carbon in the softened glass. Typical foaming temperature lies between 700 and 900 °C, and depends in major part on the type of oxidizing agent used and on powder particle size, and to a small degree on the composition of the glass (difference in the viscosity and reactivity). Fast heating rates are preferable (up to 10 K/min or even more), while moderate rates (up to 5 K/min) should be used in the sintering region (typically 600 - 700 °C). Foaming time up to two hours can be applied, however short times (5 - 35 min) are preferred. After foaming, the glass foams should be relatively rapidly cooled (possibly >10 K/min) to the annealing temperature (typically found in temperature range between 500 and 600 °C), and then annealed in a controlled way to room temperature.

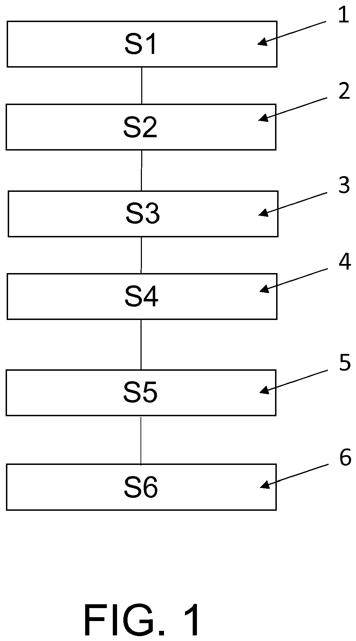

Figure 1 is a flow-chart of a method according to some embodiments of the invention.

In Figure 1 the method of producing foam glasses is shown, the method comprising the steps: (S1) grinding glass cullets into powders 1; (S2) adding a foaming agent 2; (S3) adding an oxidizing agent 3, thereby forming a mixture; (S4) blending the mixture 4; (S5) heating the mixture 5; (S6) annealing of the foam glass.

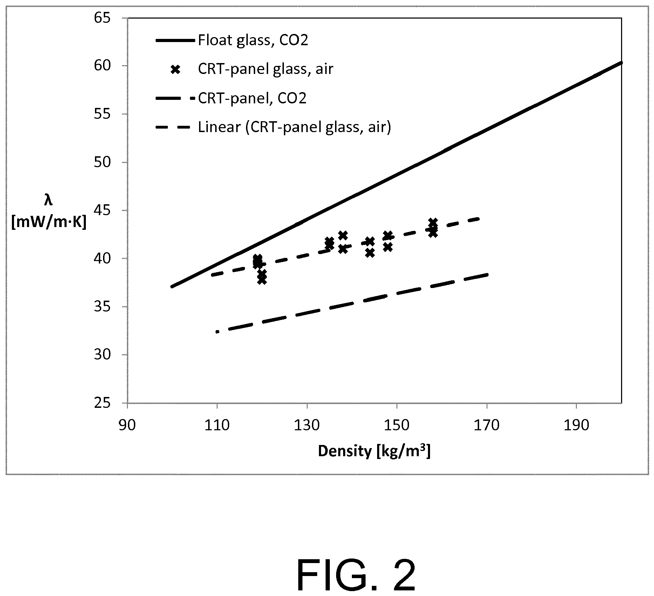

Figure 2 thermal conductivity for a CRT-panel glass-based foam glass produced according to some embodiments of the invention.

Figure 2 shows the thermal conductivity vs. density data for a CRT-panel glass foamed with carbon and manganese oxide exhibiting open pores filled with air (cross marks). The experimental data are fitted by a linear trend line (dash curve). A modelled curve (long dash curve) indicates the potential to decrease the thermal conductivity for a foam glass from CRT-panel glass with closed pores filled with CO₂ produced according to some embodiments of the invention. An experimentally modelled curve for foam glass prepared from float or bottle glass with CO₂-filled pores resembles the properties of conventional foam glasses. All data are measured at or modelled for 10 °C.

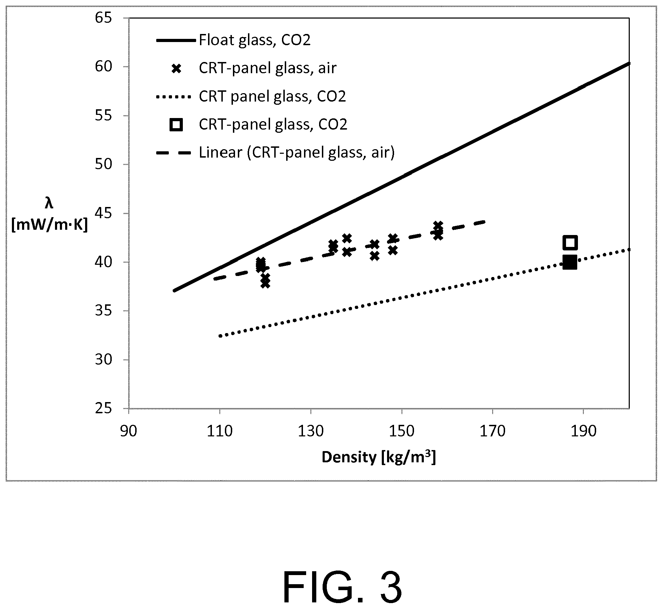

Figure 3 shows the thermal conductivity vs. density data for a CRT-panel glass foamed with carbon and manganese oxide exhibiting open pores filled with air (cross marks). The experimental data are fitted by a linear trend line (dash curve). A modelled curve (dotted curve) indicates the potential to decrease the thermal conductivity for a foam glass prepared from CRT-panel glass with closed pores filled with CO2 produced according to some embodiments of the invention. The modelled curve was confirmed by a sample with 75% CO2-filled pores (open square). With optimization of this sample to 100% CO2-filled pores, the modelled thermal conductivity (solid square) falls on the modelled curve for samples with CO2-filled pores (dotted curve). An experimentally validated modelled curve (solid line) for foam glass prepared from float or bottle glass with CO2-filled pores resembles the properties of conventional foam glasses. All data are measured at or modelled for 10 °C.

### REFERENCE EXAMPLES

Foam glasses shown in Table 1 were prepared from waste glasses with different composition and with the same addition of carbon and Fe₂O₃. The samples were foamed at the respective temperature for 15 min. The data indicate the ability of the proposed method to foam glasses with different composition at very similar conditions and prepare foam glasses with very similar properties. The foaming temperature is in the range of 850-865 °C, the density is 161-169 kg/m³, and open porosity 0-3%. It has to be noted that the density is higher than preferred due to small size of the samples and consequently higher contribution of the thicker foam shell. Typically the density decreases for 20-50 kg/m³ when larger samples are prepared at the same conditions.

**Table 1: foam glass samples prepared according to some embodiments of the invention.**

| Glass | Temperature (°C) | Density (kg/m³) | Closed porosity (%) | Open porosity (%) |
|---|---|---|---|---|
| CRT-panel | 850 | 162 | 91.1 | 3 |
| 50% bottle | 865 | 169 | 91.8 | 1.8 |
| 70% bottle | 850 | 161 | 94 | 0 |
| 50% float | 850 | 163 | 93.8 | 0 |
| bottle* | 850 | 164 | 91.6 | 1.7 |
| float* | 865 | 167 | 91.6 | 1.8 |

| | | | | |
|---|---|---|---|---|
| * with crystallization inhibitor | | | | |

## Claims

1. A method of producing foam glasses from glass cullets, the method comprising:
- grinding glass cullets into powder;
- adding a foaming agent;
- adding an oxidizing agent, thereby forming a mixture;
- blending said mixture;
- heating said mixture;
- wherein said heating is below 1100 °C , thereby softening or melting said glass, into a melt having a viscosity below 10⁸ Pa•s
- wherein said heating is carried out in under-stoichiometric gas burning atmosphere thereby producing a foam glass having a lower thermal conductivity than said glass, used for producing said foam glass;
wherein said oxidizing agent is or comprises a metal oxide, wherein said metal of said metal oxide is a transition metal;
wherein said metal oxide comprises Mn in its mixed valence state II and III.

2. A method of producing foam glass according to claim 1, wherein said foaming agent is or comprises carbon in an amount between 0.1 and 2 wt.%.

3. A method of producing foam glass according to any of the preceding claims wherein said oxidizing agent is in an amount between 1 and 10 wt.%.

4. A method of producing foam glass according to any of the preceding claims 1-3, wherein said metal oxide is Mn304.

5. A method of producing foam glass according to any of the preceding claims wherein said method further comprises adding to said mixture before blending said mixture, one or more crystallization inhibitor in an amount between 0.2 and 6 wt.%.

6. A method of producing foam glass according to claim 5 wherein said one or more crystallization inhibitor comprises a phosphate.

7. A method of producing foam glass according to claim 6 wherein said phosphate is CaHPO₄·2H₂O.

8. A method of producing foam glass according to claim 6 wherein said phosphate is a magnesium or sodium phosphate.

9. A method of producing foam glass according to claim 5, wherein said one or more crystallization inhibitor comprises Na₂SiO₃ or Al₂O₃•2SiO₂•2H₂O.

10. A method of producing foam glass according to any of the preceding claims wherein said blending is by milling, thereby reducing the particle size to below 30 µm.

## Patentansprüche

1. Verfahren zur Herstellung von Schaumgläsern aus Bruchglas, wobei das Verfahren Folgendes umfasst:
- Zermahlen von Bruchglas zu Pulver;
- Hinzufügen eines Schäummittels;
- Hinzufügen eines Oxidationsmittels, wodurch ein Gemisch gebildet wird;
- Vermischen des Gemischs;
- Erhitzen des Gemischs;
- wobei das Erhitzen unter 1100 °C erfolgt, wodurch das Glas zu einer Schmelze mit einer Viskosität unter 10⁸ Pa•s erweicht oder geschmolzen wird;
- wobei das Erhitzen in unterstöchiometrischer Gasverbrennungsatmosphäre durchgeführt wird, wodurch ein Schaumglas mit einer niedrigeren thermischen Leitfähigkeit als das Glas, das zum Herstellen dieses Schaumglases verwendet wird, hergestellt wird;
wobei das Oxidationsmittel ein Metalloxid ist oder umfasst, wobei das Metall des Metalloxids ein Übergangsmetall ist;
wobei das Metalloxid Mn in dessen gemischten Wertigkeitszustand II und III umfasst.

2. Verfahren zum Herstellen von Schaumglas nach Anspruch 1, wobei das Schäummittel Kohlenstoff in einer Menge zwischen 0,1 und 2 Gew.-% ist oder umfasst.

3. Verfahren zum Herstellen von Schaumglas nach einem der vorhergehenden Ansprüche, wobei das Oxidationsmittel in einer Menge zwischen 1 und 10 Gew.-% vorliegt.

4. Verfahren zum Herstellen von Schaumglas nach einem der vorhergehenden Ansprüche 1-3, wobei das Metalloxid Mn₃O₄ ist.

5. Verfahren zum Herstellen von Schaumglas nach einem der vorhergehenden Ansprüche, wobei das Verfahren ferner ein Hinzufügen von einem oder mehreren Kristallisationshemmern in einer Menge zwischen 0,2 und 6 Gew.-% zu dem Gemisch vor dem Vermischen des Gemischs umfasst.

6. Verfahren zum Herstellen von Schaumglas nach Anspruch 5, wobei der eine oder die mehreren Kristallisationshemmer ein Phosphat umfassen.

7. Verfahren zum Herstellen von Schaumglas nach Anspruch 6, wobei das Phosphat CaHPO₄·2H₂O ist.

8. Verfahren zum Herstellen von Schaumglas nach Anspruch 6, wobei das Phosphat ein Magnesium- oder Natriumphosphat ist.

9. Verfahren zum Herstellen von Schaumglas nach Anspruch 5, wobei der eine oder die mehreren Kristallisationshemmer Na₂SiO₃ oder Al₂O₃•2SiO₂•2H₂O umfassen.

10. Verfahren zum Herstellen von Schaumglas nach einem der vorhergehenden Ansprüche, wobei das Vermischen durch Mahlen erfolgt, wodurch die Partikelgröße auf unter 30 µm reduziert wird.

## Revendications

1. Procédé de production de verres expansés à partir de calcins de verre, le procédé comprenant :
- le broyage des calcins de verre en poudre ;
- l'ajout d'un agent moussant ;
- l'ajout d'un agent oxydant, formant ainsi un mélange ;
- le mélangeage dudit mélange ;
- le chauffage dudit mélange ;
- ledit chauffage étant inférieur à 1100°C, ramollissant ou fusionnant ainsi ledit verre, en une matière fondue ayant une viscosité inférieure à 10⁸ Pa•s
- ledit chauffage étant effectué sous atmosphère de combustion de gaz sous-stoechiométrique ce qui produit un verre expansé présentant une conductivité thermique plus faible que ledit verre utilisé pour produire ledit verre expansé ;
ledit agent oxydant étant ou comprenant un oxyde de métal, ledit métal dudit oxyde de métal étant un métal de transition ;
ledit oxyde de métal comprenant du Mn dans son état de valence mixte II et III.

2. Procédé de production de verre expansé selon la revendication 1, ledit agent moussant étant ou comprenant du carbone en une quantité comprise entre 0,1 et 2 % en poids.

3. Procédé de production de verre expansé selon l'une quelconque des revendications précédentes, ledit agent oxydant étant présent en une quantité comprise entre 1 et 10 % en poids.

4. Procédé de production de verre expansé selon l'une quelconque des revendications 1 à 3 précédentes, ledit oxyde de métal étant Mn₃O₄.

5. Procédé de production de verre expansé selon l'une quelconque des revendications précédentes, ledit procédé comprenant en outre l'ajout audit mélange avant mélangeage dudit mélange, d'un ou plusieurs inhibiteurs de cristallisation en une quantité comprise entre 0,2 et 6 % en poids.

6. Procédé de production de verre expansé selon la revendication 5, lesdits un ou plusieurs inhibiteurs de cristallisation comprenant un phosphate.

7. Procédé de production de verre expansé selon la revendication 6, ledit phosphate étant CaHPO₄·2H₂O.

8. Procédé de production de verre expansé selon la revendication 6, ledit phosphate étant un phosphate de magnésium ou de sodium.

9. Procédé de production de verre expansé selon la revendication 5, lesdits un ou plusieurs inhibiteurs de cristallisation comprenant Na₂SiO₃ ou Al₂O₃•2SiO₂•2H₂O.

10. Procédé de production de verre expansé selon l'une quelconque des revendications précédentes, ledit mélangeage se faisant par concassage, réduisant ainsi la taille de particule à moins de 30 µm.
